# EUROPEAN PATENT APPLICATION

(11) **EP 3 722 064 A1**
(43) Date of publication of application: **14.10.2020**
(21) Application number: 19169054.4
(22) Date of filing: 12.04.2019
(51) Int. Cl.: B29C 44/60

(54) **METHOD AND SYSTEM FOR DETERMINING THE QUALITY OF A FOAMED UNIT**

(71) Applicant: Covestro Deutschland AG, 51373 Leverkusen (DE)
(72) Inventor: The designation of the inventor has not yet been filed
(74) Representative: Levpat

(57) **Abstract**

The invention is directed at a method for determining the quality of a foamed unit (1), wherein the foamed unit (1) is produced by forming solidified foam (2), wherein a foamed unit edge (5) is formed by cutting through the foamed unit (1), wherein a camera (7) captures an image (8) of the foamed unit edge (5), wherein the image (8) is analyzed to detect defects (9) in the foamed unit edge (5) and wherein quality information data (11) describing the detected defects (9) is generated based on the analysis of the image (8). The invention is also directed at a corresponding system for determining the quality of a foamed unit (1).

## Description

The invention is directed at a method for determining the quality of a foamed unit and at a system for determining the quality of a foamed unit.

Foamed units, which are objects substantially consisting of solidified foam, comprise panels and in particular insulation panels. They are nowadays used for a variety of application purposes. Such panels often times comprise two solid sheets arranged opposite to each other and a solidified foam core formed between the sheets. Insulation panels produced in this way make it possible to construct a variety of different devices by providing rigid structures with thermal insulation. In particular, they make it possible to construct refrigerated containers, which are also called reefers, suitable for the bulk transport of refrigerated goods over great distances. This option has revolutionized the logistics in particular of perishable goods.

In order for the thermal insulation to be effective, it is desired that the core of the panel be homogeneous and without substantial defects. This is also important to avoid delamination of the sheets. Because the core is produced in such a way that upon completion of the panel the sheets are already in place, a visual inspection of the core itself is difficult. In addition, the core has a certain thickness and therefore even in the absence of the sheets, information about the conditions of the core distant from its sheet-facing surface is difficult to obtain. Consequently, setting the proper parameters for the production of such a panel is a process that relies on the intuition and experience of an operator rather than on a systematic and analytic approach. Preferably, the defects considered here and hereinafter are foam manufacturing defects. Such foam manufacturing defects are to be distinguished from foam morphology defects.

Therefore the object of the present invention is to provide a method and a system for determining the quality of a foamed unit which is more precise, more reliable and such that it is machine-implemented and thereby automated.

With respect to the method for determining the quality of a foamed unit the object of the invention is achieved through a method for determining the quality of a panel according to claim 1. With respect to a system for determining the quality of a foamed unit the object of the invention is achieved through a system for determining the quality of a panel according to claim 15.

The invention is based on the recognition that in the production of such foamed units, at least one edge of the foam unit is created by cutting through the foam core and any sheets on or below the foam core. A visual analysis of the edge thereby created provides information about the kind and number of defects present within the core. This information relates not only to the surfaces of the core, but also to the more central parts of the core that are distant from those surfaces. Even though such an edge presents only one slice of the core and is therefore only a small snapshot with respect to the direction normal to the edge surface, the way that the panel is produced is such that information obtained from the edge is indicative of the core as a whole. In other words, there is a high likelihood that certain defects present anywhere in the core will also be detectable by an analysis of the panel edge.

The method according to the invention is for determining the quality of a foamed unit, wherein the foamed unit is produced by forming solidified foam. In the method according to the invention, a foamed unit edge is formed by cutting though the foamed unit and a camera captures an image of the foamed unit edge. In the method according to the invention, the image is analyzed to detect defects in the foamed unit edge and quality information data describing the detected defects is generated based on the analysis of the image.

Here it is preferred that analyzing the image and generating the quality information data is executed by a computer system. Such a computer system may comprise or consist of one or more individual computers, which computers may also be distributed geographically. Such a computer system may also be a cloud computing system or part of a cloud computing system.

The quality information data may comprise any qualitative or quantitative information about detected defects. As a first example, the quality information data may provide a reproduction of the captured image with a highlight of detected defects. As a second example, the quality information data may comprise a text file with a list of detected defects and preferably additional information about each defect, such as location, dimensional size and significance.

The foamed unit may in principle be any structure comprising solidified foam or substantially consisting of solidified foam. According a preferred embodiment of the method according to the invention, the foamed unit may be foam block and in particular a flexible or rigid foam block. In this embodiment, it may be that no surface of the foam unit is covered with a sheet.

According to a further preferred embodiment of the method according to the invention, the foamed unit is produced by forming solidified foam on at least one solid sheet. Here, it is preferred that the foam block consists of a rigid foam material. Preferably, the foamed unit is produced by forming solidified foam between two solid sheets. Thus, the solid sheets may be arranged opposite such that the solidified foam is between the solid sheets. The at least one solid sheet or the two solid sheets may be at least one metal sheet or two metal sheets, respectively. It may be further be that the two solid sheets are substantially parallel sheets. In this case, the foamed unit may be a panel. In particular, the panel may be a metal panel or an insulation panel.

In principle, the foamed unit may be produced by an arbitrary production approach or mechanism. In a further preferred embodiment of method according to the invention, the foamed unit is produced by feeding the at least one sheet in a substantially continuous feed and the foamed product is separated from the feed by cutting through the feed. This permits a very efficient way of producing the foamed units.

The solidified foam may generally comprise an arbitrary material. As already mentioned the solidified foam may be a soft foam. Alternatively, the solidified foam may be a rigid foam. A preferred embodiment of the method according to the invention is characterized in that the solidified foam comprises polyurethane. Preferably, the solidified foam substantially consists of polyurethane. Polyurethane has advantageous properties for thermal insulation. It may also be that the solidified foam comprises polyisocyanurate or substantially consists of polyisocyanurate.

A further preferred embodiment of the method according to the invention is characterized in that the solidified foam is formed by mixing materials configured to react and create the solidified foam. These materials may in particular be injected, for example between the solid sheets. It is also preferred that the materials are mixed on at least one of the solid sheets such that the solidified foam is formed on at least one of the solid sheets. In this case it would be possible to apply another of the solid sheets after or during forming the solidified foam. Preferably, the mixed materials comprise a isocyanate and a polyol. The injected materials may further comprise a blowing agent and potentially other components.

In a preferred embodiment of the method according to the invention, the detected defects are classified into defect categories. In particular, such defect categories may be predefined. Such classification permits a more precise analysis of the potential reasons for the occurrence of the defects. In principle, the defect categories may have an arbitrary number and an arbitrary granularity. It is preferred that the defect categories comprise bubbles within the foam, cracks within the foam, voids within the foam and/or overrolling marks within the foam. Each of the aforementioned defects defines a defect category. Bubbles within the foam are indicative of an inappropriate mixing ratio of the materials for creating the solidified foam. Cracks within the foam may indicate unfavourable circumstances for foam creation or mechanical stresses causing the cracks. Voids within the foam may indicate insufficient volume of foam. Overrolling marks within the foam are caused when an excess of foam crests in the manner of a wave and then breaks. Such breaking of a foam wave may also be described as overrolling. It is further preferred that the quality information data comprises the classification of the detected defects into the defect categories.

It is further preferred that for the detected defects supplementary information comprising density of the defects, size of the defects, distance of the defects to the sheets and/or distance of the defects to a lateral edge of the panel is determined. Thereby also quantitative information can be generated and used to remedy the cause for the defects. A lateral edge of the panel is an edge with a length which is shorter than the length of the edges perpendicular to the lateral edge.

In principle, the quality information data can be put to an arbitrary use. For example, the quality information data may be output to a user by an information display system. In a further preferred embodiment of the method according to the invention the quality information data is compared to pre-defined alarm criteria and if the quality information data meets the pre-defined alarm criteria an alarm signal is generated. Such an alarm signal may comprise a visual signal and/or an acoustic signal.

A preferred embodiment of the method according to the invention is characterized in that the foamed unit is produced by a production apparatus based on production parameters, which production parameters comprise production variables measured by production instruments during the production of the foamed unit. Alternatively or in addition, the production parameters comprise production settings input to the production apparatus. In other words, the production parameters comprise both values output during the production process of the foamed unit by means of measurement describing the production process - the production variables - and in addition or alternatively values input to the production of the foamed unit to determine the production process, i.e. the production settings. The production instruments may comprise production sensors or may consist of production sensors.

The quality information data may in particular be used to amend the production process of the foamed unit such that the defects described in the quality information data are reduced or avoided. Therefore, it may be that based on the quality information data updated production settings are generated. Preferably, the updated production settings are input to the production apparatus.

The updated production settings may be generated based on the quality information data in principle in an arbitrary manner. A further preferred embodiment of the method according to the invention is characterized in that generating the updated production settings comprises comparing the quality information data with a pre-defined rule set for generating the updated production settings. Thus, there is a fixed rule set which provides a predefined reaction in terms of adjusting the production settings based on the detected defects. This rule set may consider the quality of the defects as well as optionally also the quantity of the defects.

In principle, the production settings may comprise an arbitrary number and arbitrary kinds of settings for influencing or determining the production process of the foamed product. In a preferred embodiment of the method according to the invention, the production settings comprise a preheat temperature of a production line, a pressure during forming the solidified foam and/or moving speed of the production line. The production line may be configured to feed the sheets in a substantially continuous feed. It is further preferred that the production settings comprise a recipe of the mixed materials. Alternatively or in addition, the production settings may comprise material quantities of the mixed materials and/or a mixing ratio of the mixed materials.

In a further preferred embodiment of the method according to the invention, the production variables comprise a temperature of the solidified foam and/or an ambient humidity when forming the solidified foam. These parameters may play an important role in determining the properties of foam formation.

A preferred embodiment of the method according to the invention is characterized in that the updated panel production settings are generated by applying the quality information data and the production parameters to a calculation model, which calculation model provides a computational relationship between the production parameters and the quality information data. The calculation model may be a computer program, part of a computer program or also a data set underlying a computer program, for example underlying a simulation program. In other words, the calculation model provides an algorithm for obtaining in particular production settings for the production of a foamed unit based on a desired defect profile. In addition or alternatively, the calculation model provides an algorithm for predicting a defect profile of a foamed unit based on production parameters that apply to the production process of that foamed unit. The algorithm provided by the calculation model may in principle be determined in an arbitrary manner. In particular, the calculation model and the algorithm provided by the calculation model may be arrived at by using machine learning. Such machine learning may for example be based on the k-nearest neighbours algorithm.

In principle, the calculation model may be a comprehensive calculation model concerning defects of all categories. According to a preferred embodiment of the method according to the invention, the calculation model comprises a plurality of calculation sub-models, with each calculation sub-model configured to provide a computational relationship between the production parameters and the quality information data for a respective defect category in which at least some of the detected defects are categorized.

In principle, the above application may be performed by any computing entity. It is further preferred that, that the computer system generates the updated production settings by applying the quality information and the production parameters to the calculation model. Here it may further be that the calculation model is saved on the computer system.

The updated production settings may then be used to produce a foamed unit with the aim of reducing the detected defects. By analyzing the foamed unit thus subsequently and in the next step produced with updated production settings, the accuracy of the prediction based on the calculation model can be compared and verified. The results of this comparison and verification can be fed back and used to further improve the calculation model itself for better accuracy in generating updated production settings in the future. In this way, the calculation model may be understood to be learning model.

Thus a further preferred embodiment of the invention is characterized in that a further foamed unit is produced based on the updated production settings, that the camera captures a further image of a foamed unit edge of the further foamed unit, that the further image is analyzed to detect defects in the foamed unit edge of the further foamed unit, that a further quality information data describing the defects of the foamed unit edge of the further foamed unit is generated and that the calculation model is updated based on a comparison of the further quality information data and a predicted quality information generated by applying the updated production settings to the calculation model.

Another relevant question with respect to the defects is to what extent the presence of defects is detrimental to the effectiveness of the foamed unit in terms of thermal insulation or for the question of delamination. In particular, the generated of the quality information data may be based on an understanding of the significance of the detected defects as it relates to the thermal insulation. Such effects of defects on the thermal insulation may be measured on the produced foamed unit. Therefore, a further preferred embodiment of the method according to the invention is characterized in that the quality information data is generated according to an analysis algorithm, that a thermal insulation of the foamed unit is measured to obtain a thermal insulation measurement result and that based on a comparison between the thermal insulation measurement and the quality information data the analysis algorithm is updated.

This approach may also be applied to different physical or chemical properties of the foamed unit. Consequently, it is preferred that that the quality information data is generated according to an analysis algorithm, that a physical property and/or a chemical property is measured to obtain a physical property measurement result and/or a chemical property measurement result and that based on a comparison between the physical property measurement result and/or the chemical property measurement result and the quality information data the analysis algorithm is updated.

Especially in those cases in which the foamed unit is a part of a greater device, a building or part of a building comprising multiple foamed units, respectively, such measurement may be undertaken on such a completed greater device, building or part of a building. Therefore it may be that the foamed unit is assembled with further foamed units to a foamed unit product before measuring the thermal insulation of the foamed unit. The information from such measurements may also be useful for improving the calculation model. Accordingly it is preferred that the calculation model is updated based on the thermal insulation measurement.

The system according to the invention is for determining the quality of a foamed unit. The system according to the invention comprises a production apparatus for producing the foamed unit by forming solidified foam and for forming a foamed unit edge by cutting through the foamed unit. The system according to the invention further comprises a camera for capturing an image of the foamed unit edge and comprises a computer system for analyzing the image in order to detect defects in the foamed unit edge and for generating quality information data describing the detected defects based on the analysis of the image.

Preferred embodiments, features and advantages of the system according to the invention correspond to preferred embodiments, features and advantages of the method according to the invention and vice versa.

Further advantages and preferred features are discussed in the following description with respect to the Figures. In the following it is shown in
- Fig. 1: a schematic view of a first embodiment of a system according to the invention for carrying out the method according to the invention and
- Fig.2: a schematic view of a second embodiment of a system according to the invention for carrying out the method according to the invention.

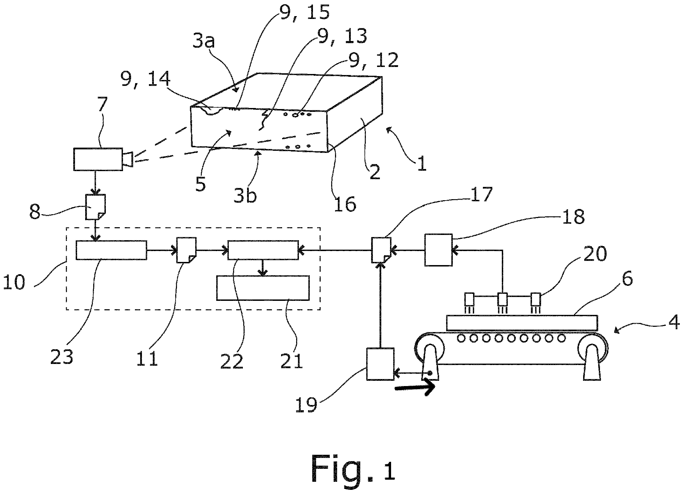

The foamed unit 1 shown in Fig. 1 is a metal panel. This metal panel is produced by forming solidified foam 2 between solid sheets 3a, b, which are here both made from metal, arranged opposed to each other. The solidified foam 2 substantially consists of polyurethane, which was formed by mixing an isocyanate, a polyol, a blowing agent, activators and catalysts. This mixing was carried out by a production apparatus of the system according to the invention. A production line 4 of that system is shown in Fig. 1. The production line 1 feeds the sheets 3a, b in a substantially feed 6. The foamed unit 1 shown is separated from the feed 6 by cutting through the feed 6, which cutting results in a foamed unit edge 5.

A camera 7 of the system according to the invention is arranged to capture an image 8 of the foamed unit edge 5. This image 8, which is shown in Fig. 1 as an image file, is analyzed by a computer system 10 of the system according to the invention to detect defects 9 in the foamed unit edge 5. As a result of this analysis, the computer system 10 generates quality information data 11 in which the detected defects 9 are described. In particular, the quality information data 11 comprises a classification of the detected defects into bubbles 12 within the foam 2, cracks 13 within the foam 2, voids 14 within the foam and overrolling marks 15 within the foam 2. The quality information data 11 further comprises a count of each class of detected defect 9 as well as the respective size and position of each detected defect 9, i.e. their distance both to the sheets 3a, b as well as to a lateral edge 16 of the foamed unit 1, and a severity classification. Thus, each detected defect 9 is classified as being of low severity, medium severity or high severity.

The production process of the foamed unit 1 may be described by production parameters 17, which in turn comprise production variables 18 measured by production instruments 20 of the production apparatus and production settings 19 input to the production apparatus and in particular to the production line 4.

The production parameters 17 are also provided to the computer system 10, which then generates updated production settings 21 by applying the quality information data 11 as well as the production parameters 17 to a calculation model 22, which calculation model 22 is saved on the computer system 10. This calculation model 22 is a software to simulate the production process. In particular, the calculation model 22 permits to predict the occurrence of defects 9 based on the production parameters 17 used in the production of a foamed unit 1, which is here a panel. Based on the same data set, the calculation model 22 further permits to arrive at improved production settings 19 based on the quality information data 11 describing detected defects 9 of a foamed unit and the production parameters 17 used in the production of that foamed unit 1. In other words, the calculation model 22 is able to determine which of the production settings 18 needs to be adjusted in order to avoid those defects 9 that were detected according to the quality information data 11 obtained from the foamed unit 1 with the defects 9.

These updated production settings 21 are then applied to the production system for the production of a further foamed unit, which further foamed unit is not shown here. This further foamed unit is then subjected to the same analysis as the foamed unit 1. Based on this analysis and the generation of a further quality information data from the further foamed unit, the calculation model 22 is updated by the computer system 10 in order to more closely align the defects that were actually detected from the further foamed unit as described in the further quality information data with the defects that were expected according to the calculation model 22 based on the updated production settings 21. In this way, the calculation model 22 can be successively made more accurate.

Specifically, an analysis algorithm 23 carried out on the computer system 10 generated the quality information data 11 from the image 8. This analysis algorithm 23 also takes into account for each class of defect 9 its relevance for the thermal insulation of the foamed unit 1. To assess the accuracy with which the analysis algorithm 23 considers each class of defect 9 relevant, the foamed unit 1 is assembled with further foamed units to form a building component and this building component is subjected to a thermal insulation test, resulting in a thermal insulation measurement. The thermal insulation measurement can then be used to update both the analysis algorithm 23 as well as the calculation model 22.

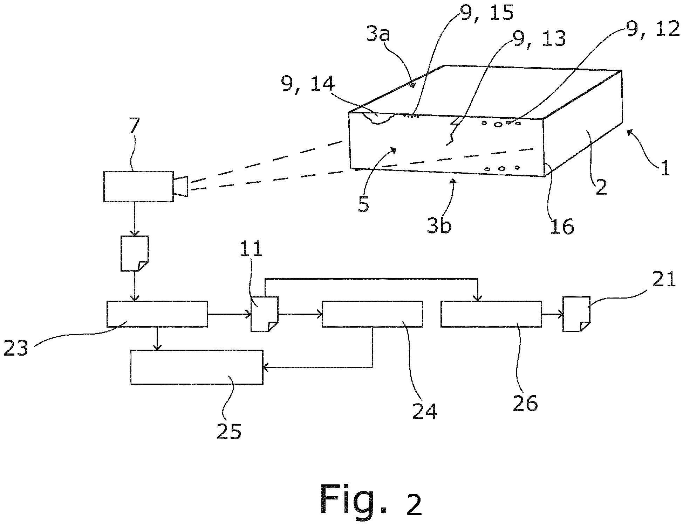

The embodiment of the system according to the invention in Fig. 2 is a simplified variant, with only the differences to the embodiment of Fig. 1 being described in the following. In this embodiment, the quality information data 11 is compared to pre-defined alarm criteria 24. If the specified conditions of the pre-defined alarm criteria 24 are met, which means that the panel 1 has defects 9 such that it fails to comply with quality demands, an alarm signal 25, which here is a visual output is generated. Further, the updated panel production settings 21 are here generated by comparing the quality information data 11 with a pre-defined rule set 26.

## Claims

1. Method for determining the quality of a foamed unit (1), wherein the foamed unit (1) is produced by forming solidified foam (2), wherein a foamed unit edge (5) is formed by cutting though the foamed unit(1), wherein a camera (7) captures an image (8) of the foamed unit edge (5), wherein the image (8) is analyzed to detect defects (9) in the foamed unit edge (5) and wherein quality information data (11) describing the detected defects (9) is generated based on the analysis of the image (8).

2. Method according to claim 1, **characterized in that** the foamed unit (1) is produced by forming solidified foam (2) on at least one solid sheet (3a, b), preferably between two solid sheets (3a, b).

3. Method according to claim 2, **characterized in that** the foamed unit (1) is produced by feeding the at least one sheet (3a, b) in a substantially continuous feed (6) and that the foamed unit is separated from the feed (6) by cutting through the feed (6).

4. Method according to one of claims 1 to 3, **characterized in that** the solidified foam (2) comprises polyurethane, preferably, that the solidified foam substantially consists of polyurethane.

5. Method according to one of claims 1 to 4, **characterized in that** the solidified foam (2) is formed by mixing, in particular injecting, materials configured to react and create the solidified foam (2), preferably, wherein the mixed materials comprise an isocyanate and a polyol.

6. Method according to one of claims 1 to 5, **characterized in that** the detected defects (9) are classified into defect categories, preferably, wherein the defect categories comprise bubbles (12) within the foam (2), cracks (13) within the foam (2), voids (14) within the foam (2), overrolling marks (15) within the foam (2), in particular, that for the detected defects (9) supplementary information comprising density of the defects (9), size of the defects (9), distance of the defects (9) to the sheets (3a, b) and/or distance of the defects (9) to a lateral edge (16) of the panel (1) is determined.

7. Method according to one of claims 1 to 6, **characterized in that** the quality information data (11) is compared to pre-defined alarm criteria (24) and that if the quality information data (11) meets the pre-defined alarm criteria (24) an alarm signal (25) is generated.

8. Method according to one of claims 1 to 7, **characterized in that**, the foamed unit (1) is produced by a production apparatus based on production parameters (17), which production parameters (17) comprise production variables (18) measured by production instruments (20) during the production of the foamed unit (1) and/or production settings (19) input to the production apparatus, in particular, that based on the quality information data (11) updated production settings (21) are generated, preferably, that the updated production settings (21) are input to the production apparatus.

9. Method according to claim 8, **characterized in that** generating the updated production settings (21) comprises comparing the quality information data with a pre-defined rule set for generating the updated production settings.

10. Method according to claim 8 or 9, **characterized in that** the production settings (19) comprise a preheat temperature of a production line (4), a pressure during forming the solidified foam (2) and/or moving speed of the production line (4), preferably, that the production settings (19) comprise material quantities of the mixed materials and/or a mixing ratio of the mixed materials.

11. Method according to one of claims 8 to 10, **characterized in that** the production variables (18) comprise a temperature of the solidified foam (2) and/or an ambient humidity when forming the solidified foam (2).

12. Method according to one of claims 8 to 11, **characterized in that** the updated production settings (21) are generated by applying the quality information data (11) and the production parameters (17) to a calculation model (22), which calculation model (22) provides a computational relationship between the production parameters (17) and the quality information data (11), preferably, that a computer system (10) generates the updated production settings (21) by applying the quality information data (11) and the production parameters (17) to the calculation model (22), in particular, that the calculation model (22) is saved on the computer system (10).

13. Method according to claim 12, **characterized in that** a further foamed unit is produced based on the updated panel production settings (21), that the camera (7) captures a further image of a foamed unit edge of the further foamed unit, that the further image is analyzed to detect defects in the foamed unit edge of the further foamed unit, that further quality information data describing the defects of the foamed unit edge of the further foamed unit is generated and that the calculation model (22) is updated based on a comparison of the further quality information data and a predicted quality information generated by applying the updated production settings (21) to the calculation model (22).

14. Method according to one of claims 1 to 13, **characterized in that** the quality information data (11) is generated according to an analysis algorithm (23), that a thermal insulation of the foamed unit (1) is measured to obtain a thermal insulation measurement result and that based on a comparison between the thermal insulation measurement and the quality information data (11) the analysis algorithm (23) is updated, in particular, that the foamed unit (1) is assembled with further foamed units to a foamed unit product before measuring the thermal insulation of the foamed unit (1), preferably, that the calculation model (22) is updated based on the thermal insulation measurement.

15. System for determining the quality of a foamed unit (1) with a production apparatus for producing the foamed unit (1) by forming solidified foam (2) and for forming a foamed unit edge (5) by cutting through the foamed unit (1), with a camera (7) for capturing an image (8) of the foamed unit edge (5) and with a computer system (10) for analyzing the image (8) in order to detect defects (9) in the foamed unit edge (5) and for generating quality information data (11) describing the detected defects (9) based on the analysis of the image (8).
